# EUROPÄISCHE PATENTSCHRIFT

(11) **EP 0 428 788 B1**
(45) Veröffentlichungstag und Bekanntmachung des Hinweises auf die Patenterteilung: **26.05.1993**
(21) Anmeldenummer: 89123004.7
(22) Anmeldetag: 13.12.1989
(51) Int. Cl.: C09J 177/06, C08L 77/06, C08K 5/3477

(54) **Textile Fixiereinlagen**
Bonding means for fabrics
Moyens de fixation pour textiles

(30) Priorität: 24.11.1989 DE 3938880
(43) Veröffentlichungstag der Anmeldung: 29.05.1991
(73) Patentinhaber: HÜLS AKTIENGESELLSCHAFT, 45764 Marl (DE)
(72) Erfinder: Simon, Ulrich, D-4690 Herne 1 (DE); Scholten, Heinz, Dr., D-4358 Haltern 7 (DE)

(56) Entgegenhaltungen:
- DE-A- 2 307 346
- US-A- 3 919 218

## Beschreibung

Gegenstand der Erfindung sind textile Fixiereinlagen, die nach dem Pulverpunktverfahren mit einem Schmelzkleber beschichtet sind.

Schmelzkleber hierfür auf Basis von Copolyamiden sind seit langem bekannt. Derartige Schmelzkleber haben sich gut bewahrt. Verbesserte Produkte werden erhalten, wenn zusätzlich Melaminharze als Vernetzungsmittel eingesetzt werden (DE-OS 23 07 346).

Als nachteilig bei den Systemen mit Vernetzungsmitteln hat sich die Aufbereitung erwiesen. Es ist erforderlich, die beiden Stoffe in der Schmelze zu mischen, ohne daß bereits eine Vernetzung eintreten darf. Dies gilt auch für den Zeitpunkt des Auftrages. Während des Fixiervorganges soll die gewünschte Vernetzung dann jedoch innerhalb von 10 bis 20 Sekunden ablaufen.

Im Hinblick darauf wären geblockte Isocyanate als Vernetzungsmittel als günstig einzustufen. In Fachkreisen werden geblockte Isocyanate jedoch als bedenklich bezeichnet (Dermil Research Ltd. - Technical Report vom 11.07.85), da sie toxische und korrosive Verbindungen abspalten.

Aufgabe der Erfindung war es, textile Fixiereinlagen zu entwickeln, die eine verbesserte Wasch- und Reinigungsbeständigkeit aufweisen.

Diese Aufgabe wurde durch Verwendung eines Schmelzklebers gelöst, der zu
90 bis 99 Gew.-% aus einem Copolyamid mit einem Schmelzpunkt im Bereich von 80 bis 150 °C und einer Lösungsviskosität etaᵣₑₗ im Bereich von 1,3 bis 1,7
und zu 1 bis 10 Gew.-% aus einem durch Trimerisierung von Isophorondiisocyanat erhaltenen Isocyanatoisocyanurat besteht.

Als Fixiereinlagen werden Gewebe, Gewirke und Vliese eingesetzt, die sowohl aus natürlichen als auch aus synthetischen Fasern hergestellt sein können. Es können auch verschiedene Fasertypen miteinander kombiniert werden. Geeignete Einlagen werden in Peter Sroka, "Handbuch der textilen Fixiereinlagen", 2. Auflage 1983, Sinus-Verlag GmbH, Krefeld, Seiten 28 bis 35, beschrieben.

Für den Schmelzkleber werden für diesen Zweck bekannte Copolyamide eingesetzt. Sie werden aus mindestens zwei, Polyamide bildenden Monomeren, wie Lactame und/oder Salze aus Dicarbonsäuren und Diaminen, hergestellt. Statt der Salze können auch Dicarbonsäuren und Diamine getrennt in den Reaktionskessel eingebracht werden.

Bevorzugte Copolyamide weisen nachstehende Monomerzusammensetzung (Gew.-%) auf:
40 % Laurinlactam, 30 % Caprolactam, 30 % AH-Salz;
60 % Laurinlactam, 20 % Caprolactam, 20 % AH-Salz;
25 % Laurinlactam, 25 % Caprolactam, 25 % Aminoundecansäure und 25 % Azelainsäure/Hexamethylendiamin;
60 % Laurinlactam, 20 % Caprolactam, 20 % Adipinsäure/Isophorondiamin;
40 % Laurinlactam, 30 % Caprolactam, 30 % Dodecandisäure/Methyl-pentamethylendiamin.

Weitere für Schmelzkleber brauchbare Copolyamide werden in den DE-PSS 12 53 499, 15 94 233 und den DE-OSS 19 39 758, 23 24 159, 23 24 160, 24 36 430, 29 20 416, 32 48 776, 25 09 736 beschrieben.

Die Copolyamide weisen einen Schmelzpunkt im Bereich von 80 bis 150 °C, vorzugsweise von 90 bis 136 °C, auf. Sie besitzen eine Lösungsviskosität etaᵣₑₗ im Bereich von 1,3 bis 1,7. Die Lösungsviskosität wird gemäß DIN 53 727 bestimmt und zwar mit einer 0,5 gewichtsprozentigen Lösung des Copolyamids in m-Kresol bei 25 °C.

Die zweite Komponente ist ein durch Trimerisierung von Isophorondiiocyanat erhaltenes Isocyanatoisocyanurat. Es kann beispielsweise wie in der US-PS 3 919 218 beschrieben hergestellt werden. Das in bekannter Weise erhaltene Produkt ist stets ein Gemisch von Reaktionsprodukten unterschiedlichen Molekulargewichtes. Das Gemisch wird in der Regel nicht fraktioniert sondern als solches als Vernetzungsmittel eingesetzt.

Aufgrund der vorliegenden Analysenergebnisse kann das Gemisch wie folgt charakterisiert werden. Es besteht im wesentlichen aus Trimeren und Reaktionsprodukten derselben mit weiterem Monomer. Die Trimeren entsprechen im wesentlichen den nachstehenden Formeln A und B. Die Trimeren der beiden Formeln sind jeweils Isomerengemische.

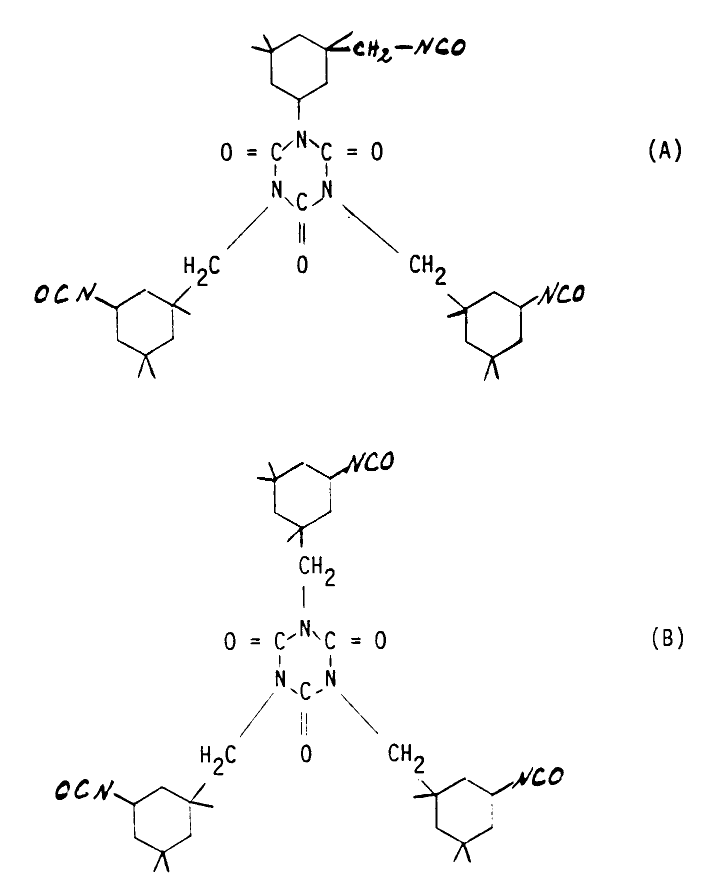

Die Schmelzkleber enthalten 90 bis 99 Gew.-% eines oder mehrerer der genannten Copolyamide sowie 1 bis 10 Gew.-% des beschriebenen Isocyanatoisocyanurats.

Die erfindungsgemäßen Fixiereinlagen werden nach dem Pulverpunktverfahren beschichtet. Das Auftragsgewicht der Schmelzkleber liegt im Bereich von 10 bis 28 g/m, vorzugsweise von 18 bis 24 g/m.

Die erfindungsgemäßen Fixiereinlagen weisen - unter Beibehaltung guter Allgemeineigenschaften - insbesondere eine extreme Waschbeständigkeit und einen verminderten Krumpf auf.

Die Haftfestigkeit wurde gemäß DIN 54 310 bestimmt.

Mit Buchstaben gekennzeichnete Versuche sind nicht erfindungsgemäß.

### Beispiele

### Versuche 1 bis 4 und A

Ein handelsübliches Isocyanatoisocyanurat der beschriebenen Art wird zu einem Pulver mit einem mittleren Durchmesser von < 200 µm gemahlen und mit einem Copolyamid (Laurinlactam: 60 Gew.-%, Caprolactam: 25 Gew.-%, Salz aus Hexamethylendiamin und Adipinsäure: 15 Gew.-%; Fp: 135 °C; etaᵣₑₗ: 1,5) in einem Pulvermischer gemischt. Der so erhaltene Schmelzkleber wird mit einer Pulverpunktanlage (System Saladin) unter Verwendung einer 28 mesh-Auftragswalze auf eine Baumwollwäscheeinlage (Flächengewicht: 80 g/m) aufgetragen. Die beschichtete Einlage wird auf einer Bügelpresse gegen einen handelsüblichen Hemdenoberstoff (Polyester/Baumwoll-Mischgewebe) fixiert (Fixierzeit: 20 sec; Druck: 1 500 hPa; Temperatur: 160 °C).

Der Schmelzkleber von Versuch A enthielt kein Isocyanatoisocyanurat.

### Versuche 5 und B

Das in den Versuchen 1 bis 4 verwendete Copolyamid wird durch eines mit folgender Monomer-Zusammensetzung (Laurinlactam: 40 Gew.-%, Caprolactam: 30 Gew.-%, Salz aus äquivalenten Mengen von Methyl-pentamethylendiamin und Dodecandisäure: 30 Gew.-%; Fp: 108 °C; etaᵣₑₗ: 1,55) ersetzt.

Der Schmelzkleber von Versuch B enthält kein Isocyanatoisocyanurat.

Die Weiterverarbeitung und -behandlung erfolgt wie bei den Beispielen 1 bis 4 angegeben.

### Versuch 6

Das in den Versuchen 1 bis 4 verwendete Copolyamid wird durch eines mit folgender Monomer-Zusammensetzung [Laurinlactam: 40 Gew.-%, Caprolactam: 30 Gew.-%, Salz aus Dodecandisäure und (5 Gew.-% im Überschuß) Methyl-pentamethylendiamin: 30 Gew.-% Fp: 108 °C; etaᵣₑₗ: 1,44] ersetzt.

Die Weiterverarbeitung und -behandlung erfolgt wie oben angegeben.

Zur Bestimmung der Haftung werden 30 x 5 cm große Streifen hergestellt. Diese werden ohne Vorbehandlung, nach 10 Kochwäschen in einer Haushaltswaschmaschine und nach zehnmaliger kommerzieller chemischer Reinigung in einer ZWICK-Zerreißmaschine gerissen.

Die Ergebnisse sind der nachfolgenden Tabelle zu entnehmen.

**Tabelle**

| Versuch | Anteil *) Isocyanatoisocyanurat [%] | Auftragsgewicht (g/m2) | Haftfestigkeit [N/5 cm] | | |
|---|---|---|---|---|---|
| | | | ohne Vorbeh. | n. Wäsche | n. Reinigung |
| 1 | 1 | 12 | Abriß | 12 | 22 |
| 2 | 3 | 12 | Abriß | 14 | 26 |
| 3 | 5 | 12 | Abriß | 13 | 24 |
| 4 | 10 | 13 | Abriß | 18 | 24 |
| A | ohne | 12 | 20 | 5 | 19 |
| 5 | 5 | 13 | Abriß | 1 | 22 |
| B | ohne | 14 | Abriß | Ablösung | 20 |
| 6 | 5 | 11 | 15 | 6 | 20 |

| | | | | | |
|---|---|---|---|---|---|
| *) im Schmelzkleber | | | | | |

## Patentansprüche

1. Textile Fixiereinlage, die nach dem Pulverpunktverfahren mit einem Schmelzkleber beschichtet ist, wobei der Schmelzkleber zu
90 bis 99 Gew.-% aus einem Copolyamid mit einem Schmelzpunkt im Bereich von 80 bis 150 °C und einer Lösungsviskosität etaᵣₑₗ im Bereich von 1,3 bis 1,7
und zu 1 bis 10 Gew.-% aus einem durch Trimerisierung von Isophorondiisocyanat erhaltenen Isocyanatoisocyanurat besteht.

## Claims

1. A bondable textile interlining coated with a hot-melt adhesive by the powder spot method, where the hot-melt adhesive is composed of
from 90 to 99% by weight of a copolyamide having a melting point in the range from 80 to 150°C and a solution viscosity ηᵣₑₗ in the range from 1.3 to 1.7
and from 1 to 10% by weight of an isocyanatoisocyanurate obtained by trimerisation of isophorone diisocyanate.

## Revendications

1. Garniture textile de fixage, enduite selon le procédé à points de poudre avec un adhésif fusible constitué pour
90 à 99 % en poids par une copolyamide présentant un point de fusion compris dans un domaine de 80 à 150 °C et une viscosité êta_{rel.} en solution comprise dans un domaine de 1,3 à 1,7
et pour
1 à 10 % en poids par un isocyanatoisocyanurate obtenu par trimérisation de di-isocyanate d'isophorone.
